# FASCICULE DE BREVET EUROPEEN

(11) **EP 2 865 937 B1**
(45) Date de publication et mention de la délivrance du brevet: **10.03.2021**
(21) Numéro de dépôt: 14189149.9
(22) Date de dépôt: 16.10.2014
(51) Int. Cl.: F21S 41/25, F21S 41/32, F21S 41/663, F21S 41/148, F21V 8/00

(54) **Dispositif d'éclairage comportant un guide de rayons lumineux**
Beleuchtungsvorrichtung, die eine Lichtstrahlführung umfasst
Lighting device comprising a light guide

(30) Priorité: 23.10.2013 FR 1360341
(43) Date de publication de la demande: 29.04.2015
(73) Titulaire: VALEO VISION, 93012 Bobigny Cedex (FR)
(72) Inventeur: De Lamberterie, Antoine, 75019 Paris (FR)

(56) Documents cités:
- WO-A1-2011/121488
- DE-A1-102007 052 696
- JP-A- 2008 078 086
- JP-A- 2010 129 311
- US-A1- 2006 087 860
- US-A1- 2011 085 343

## Description

### DOMAINE TECHNIQUE DE L'INVENTION

La présente invention se rapporte au domaine des dispositifs d'éclairage et/ou de signalisation pour véhicules. En particulier, la présente invention porte sur un dispositif d'éclairage et/ou de signalisation pour un véhicule automobile comportant un guide de rayons lumineux. L'invention concerne également un guide de rayons lumineux en tant que tel.

### ÉTAT DE LA TECHNIQUE

De tels dispositifs d'éclairage comprennent généralement une source lumineuse qui émet des rayons lumineux, un guide de lumière dans lequel se propagent des rayons lumineux issus de la source lumineuse par réflexions.

Le document JP 2010 129 311 A1 décrit un dispositif d'éclairage connu de l'homme du métier.

Dans l'état de l'art, et notamment dans le domaine de l'automobile, il est connu de cumuler plusieurs fonctions d'éclairage au sein de ce type de dispositif d'éclairage, de manière à simplifier le câblage électrique résultant généralement de ces différentes fonctions. Le document de brevet EP2306073 décrit un exemple dans lequel le cumul de ces fonctions est réalisé à partir de plusieurs guides de lumière avec une ou plusieurs sources de lumière.

Cependant un des inconvénients majeur de tels dispositifs d'éclairage, est lié au fait que de telles configurations engendrent systématiquement une perte d'efficacité et d'efficience, notamment, au niveau du faisceau lumineux généré en sortie de ces dispositifs.

De plus, ceux-ci sont généralement encombrants et coûteux à concevoir.

La présente invention vise à résoudre ces problèmes résultant des inconvénients de l'état de l'art.

### DIVULGATION DE L'INVENTION

Par conséquent un des buts de l'invention est de résoudre le problème lié à l'amélioration des performances des dispositifs d'éclairage et/ou de signalisation comportant un guide de rayons lumineux tout en réduisant leur compacité.

De plus un des avantages d'un tel dispositif est d'avoir un coût de fabrication très faible au regard des dispositifs d'éclairage et/ou de signalisation de l'état de l'art.

Dans ce dessein, l'invention concerne un dispositif tel que défini dans la revendication 1.

Dans des modes de réalisation particuliers :
- le point de focalisation est situé à distance d'un bord supérieur de la face de sortie de la nappe ;
- le point de focalisation est situé sur un bord supérieur de la face de sortie de la nappe ;
- la nappe de guidage est délimitée longitudinalement par la face de sortie qui est une tranche de la nappe s'étendant verticalement et transversalement à l'extrémité avant de la nappe ;
- la face de sortie est plane ;
- la nappe de guidage est délimitée longitudinalement par une face de réflexion qui est une tranche s'étendant à l'arrière de la nappe et qui est courbée, dans un plan vertical longitudinal, selon un profil elliptique ;
- les faces d'entrée, de réflexion et de sortie de lumière s'étendent sur toute la largeur de la nappe.
- la face de réflexion s'étend depuis un bord inférieur de la face de sortie de lumière ;
- une section droite de la face de réflexion présente un profil de prisme en toit, notamment sur tout le long de la face de réflexion. On entend par section droite de la face de sortie en un point la section de la face de sortie par un plan normal à la face de sortie en ce point ;
- une section droite de la face de réflexion présente un profil rectiligne ;
- la nappe de guidage est délimitée verticalement par une face avant qui est une tranche s'étendant depuis un bord supérieur de la face de sortie de lumière ;
- la face avant est plane ;
- la face avant présente deux parties planes liées par une pliure ;
- la nappe de guidage est délimitée verticalement par la face d'entrée qui est une tranche s'étendant transversalement et longitudinalement ;
- la face d'entrée s'étend depuis un bord de la face de réflexion jusqu'à un bord d'une face avant ;
- la nappe de guidage est délimitée transversalement par deux faces de guidage ;
- la largeur de la nappe, mesurée entre les deux faces de guidage, est faible au regard des dimensions de ces faces de guidages. Ces faces de guidages délimitent une zone de propagation des rayons lumineux dans le guide, par réflexion interne sur ces faces ;
- les faces de guidage sont planes ;
- la nappe de guidage a une épaisseur constante correspondant à la largeur de la face d'entrée et de la face de sortie ;
- la nappe de guidage est réalisée en une seule pièce en un matériau transparent tel que du polycarbonate ou encore du polyméthacrylate de méthyle et
- une zone réfléchissante est comprise sur une partie ou la totalité de la face de réflexion.

L'invention concerne un dispositif d'éclairage et/ou de signalisation, notamment pour véhicule, présentant un axe optique et comportant une source lumineuse et une lentille, le dispositif comportant un tel guide de rayons lumineux agencé entre ladite source lumineuse et la lentille pour que des rayons lumineux émis par la source lumineuse dans le guide, se propageant dans le guide pour atteindre la lentille et émergeant de la lentille, aient une direction substantiellement horizontale et contenant l'axe optique dudit dispositif.

Dans des modes de réalisation particuliers:
- la source lumineuse est apte à émettre un cône de lumière selon un axe d'émission principal, un point de focalisation de la nappe de guidage étant disposé de façon à ce qu'un rayon émis par la source lumineuse dans une direction parallèle à l'axe d'émission principal sort du guide dans une direction parallèle à l'axe optique ;
- la nappe de guidage formé par le guide est disposée verticalement ;
- la nappe est disposée de façon à ce qu'au moins une des faces de guidage soit disposée dans un plan coupant l'axe optique, notamment contenant l'axe optique de la lentille ;
- la nappe de guidage est agencé par rapport à la lentille de façon à ce qu'un point de focalisation correspond au foyer objet de ladite lentille ;
- la source lumineuse est agencée au niveau d'une face d'entrée de la nappe de guidage ;
- les faces de sortie tangentes des nappes forment une courbe de champ associée à la lentille, et
- les sources lumineuses sont agencées sur un même circuit imprimé.

### DESCRIPTION DES FIGURES

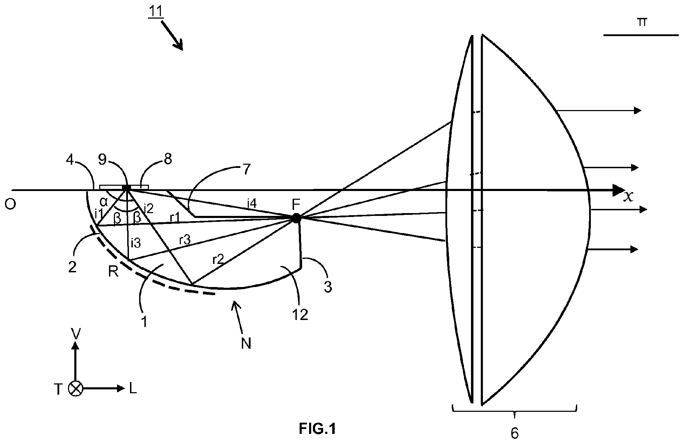

D'autres avantages et caractéristiques de l'invention apparaîtront mieux à la lecture de la description de deux modes de réalisation préférés qui vont suivre, en référence aux figures ci-dessous, à titre d'exemple indicatif et non limitatif :
- le figure 1 représente une vue de côté du dispositif d'éclairage et/ou de signalisation selon une première variante d'un premier mode de réalisation de l'invention ;
- la figure 2 illustre une vue de côté du dispositif d'éclairage et/ou de signalisation selon une deuxième variante d'un premier mode de réalisation de l'invention;
- la figure 3 représente une vue du dessus du dispositif d'éclairage et/ou de signalisation selon un deuxième mode de réalisation de l'invention ;
- le figure 4A illustre une vue de dessus d'une première configuration d'une face de réflexion du guide dans l'un quelconque des modes de réalisation de l'invention, et
- la figure 4B représente une vue de dessus d'une deuxième configuration de la face de réflexion du guide dans l'un quelconque des modes de réalisation de l'invention.

### MODES DE REALISATION DE L'INVENTION

Dans le cadre de la description et les revendications, on adoptera à titre non limitatif des orientations longitudinale dirigée d'arrière en avant en référence à la direction générale d'émission indiquée sur les figures par la flèche Ox, verticale dirigée de bas en haut et transversale, qui sont indiquées par le trièdres "L,V,T" représentés sur les figures.

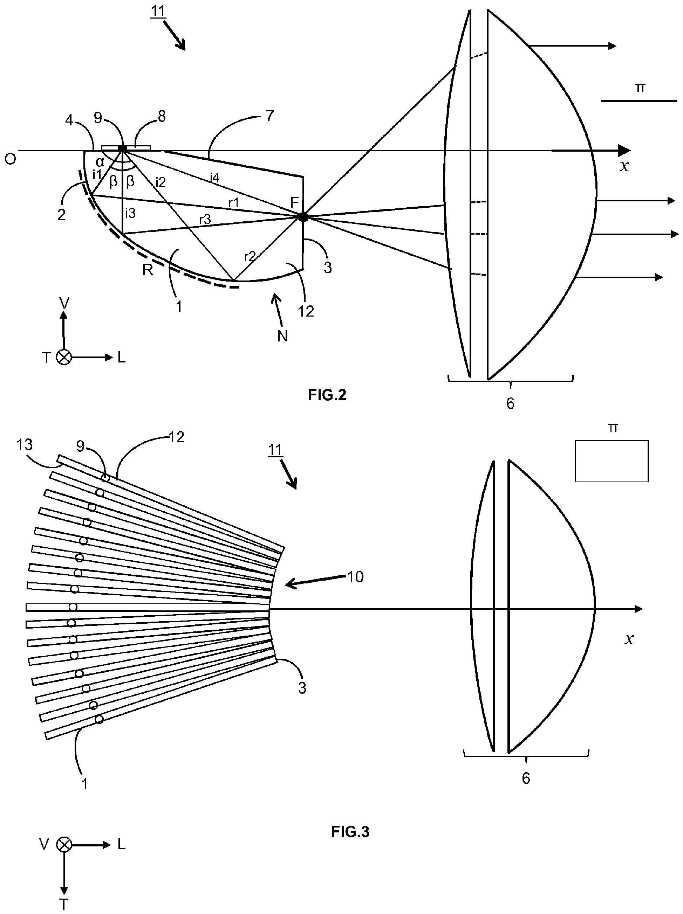

Dans un premier mode de réalisation représenté aux figures 1 et 2, le dispositif 11 d'éclairage et/ou de signalisation, pour véhicule automobile, présente un axe optique Ox et est destiné à projeter un faisceau lumineux globalement vers l'avant selon un axe optique Ox longitudinal.
Ce dispositif 11 comporte au moins une source lumineuse 9 et au moins un guide N de rayons lumineux agencé entre la source 9 et une lentille 6 de sorte que des rayons lumineux émis par la source lumineuse 9 dans le guide N, se propageant dans le guide N pour atteindre la lentille 6 et émergeant de la lentille 6, aient une direction substantiellement horizontale contenant l'axe optique dudit dispositif 11.

Le guide N, en matière transparente, présente une face d'entrée 4 susceptible de coopérer avec la source lumineuse 9.

Ce guide N est formé par une nappe 1 de guidage de lumière, ou plaque, qui s'étend ici dans un plan longitudinal vertical. Cette nappe 1 de guidage est disposée verticalement. Une telle nappe 1 est réalisée en une seule pièce en un matériau transparent tel que du polycarbonate (PC) ou du polyméthacrylate de méthyle (PMMA). Cette nappe 1 de guidage présente un bord selon un profil en ellipse. Alternativement, cette nappe 1 peut être réalisée en plusieurs pièces.

Cette nappe 1 est comprise entre deux grandes faces parallèles délimitées par un contour notamment formé par quatre faces ou tranches.

Plus précisément, cette nappe 1 de guidage est délimitée longitudinalement par trois faces correspondant à :
- une face de sortie 3 de lumière, notamment à une tranche de la nappe 1 s'étendant verticalement et transversalement à l'extrémité avant de la nappe 1 ;
- une face de réflexion 2, notamment à une tranche s'étendant à l'arrière de la nappe transversalement et qui est courbée, dans un plan vertical longitudinal selon un profil elliptique, et
- une face avant 7, qui délimite verticalement la nappe 1 de guidage et notamment à une tranche s'étendant depuis un bord supérieur de la face de sortie 3 de lumière.

Cette nappe 1 de guidage est délimitée verticalement par la face d'entrée 4 de lumière correspondant à une tranche s'étendant transversalement et longitudinalement.. La face d'entrée 4 s'étend depuis un bord de la face de réflexion 2 jusqu'à un bord de la face avant 7.

Les faces avant 7, d'entrée 4, de réflexion 2 et de sortie 3 de lumière s'étendent sur toute la largeur de la nappe 1.

Les faces de réflexion 2 et avant 7 s'étendent entre les extrémités éloignées de la face d'entrée 4 et de la face de sortie 3.On notera que la face de réflexion 7 s'étend depuis un bord inférieur de la face de sortie 3 de lumière.

On notera que cette face de réflexion 2 au profil elliptique conjugue la source de lumière 9 située au niveau de la face d'entrée 4 avec le foyer de focalisation F localisée au niveau de la face de sortie 3 de la nappe 1 de guidage.

Ainsi que nous l'avons vu précédemment, la nappe 1 de guidage de lumière est comprise entre deux grandes faces parallèles du guide délimitées par le contour à quatre faces. Les deux grandes faces parallèles, dites faces de guidage latérales 12 et 13, délimitent transversalement cette nappe 1 de guidage. Ces deux faces de guidage latérales 12 et 13 sont planes. Ainsi que nous l'avons vu, elles sont également parallèles entre elles de manière à ce que la nappe 1 de guidage présente une épaisseur transversale constante qui est faible par rapport à ses dimensions longitudinale et verticales. Une telle épaisseur est comprise entre environ 1 à 5 mm, la dimension verticale est comprise entre environ 10 et 50 mm et la dimension longitudinale est comprise entre environ 20 et 70 mm. On notera que cette épaisseur constante correspond à la largeur de la face d'entrée 4 et de la face de sortie 3.

La largeur de la nappe 1 de guidage, mesurée entre les deux faces de guidage 12, 13, est faible au regard des dimensions de ces faces de guidages 12, 13. Ces faces de guidage 12, 13 délimitent une zone de propagation des rayons lumineux dans le guide N, par réflexion interne sur ces faces 12, 13.

De manière non limitative, on considèrera que la nappe 1 de guidage formé par le guide N est disposée verticalement et que la face d'entrée 4 est rectiligne et située dans un plan horizontal. La face de sortie 3 est quant à elle, plane et orthogonale à la face d'entrée 4, soit vertical. Dans cette configuration, la nappe 1 est disposée de façon à ce qu'au moins une des faces de guidage 12, 13 est agencée dans un plan coupant l'axe optique, notamment contenant l'axe optique Ox de la lentille 6.

De façon alternative, on notera que la face de sortie 3 peut être inclinée..

La face de réflexion 2 ayant un profil elliptique comporte un foyer situé au niveau de la face d'entrée 4 du guide de lumière. Le centre, ou un autre point, d'une source de lumière 9 est placé au niveau de ce foyer. Cette source de lumière 9 est disposée sur une plaque support 8 comportant un circuit imprimé pour les connexions de cette source de lumière 9.

Cette source 9 est de préférence constituée par au moins une diode électroluminescente de géométrie plane désignée en abrégé par LED. On notera que l'agencement de la source de lumière 9 par rapport à la face d'entrée 4 est particulière en ce qu'il existe un jeu de 0,1mm à 0,5 mm entre ces derniers. Un tel agencement permet d'améliorer la fiabilité du dispositif 11 notamment vis-à-vis de vibrations du guide N.

Cette source lumineuse 9, notamment sa surface émettrice peut avoir des formes diverses : une forme qui peut être allongée, circulaire, rectangulaire, carrée etc...

La source lumineuse 9 est agencée horizontalement au niveau de la face d'entrée 4 et est apte à émettre un cône de lumière selon un axe d'émission principal sensiblement vertical, le point de focalisation F de la nappe 1 de guidage étant disposé de façon à ce qu'un rayon émis par la source lumineuse 9 dans une direction parallèle à l'axe d'émission principal sort du guide dans une direction parallèle à l'axe optique..

Ainsi que nous l'avons évoqué précédemment, la source lumineuse 9 est dans une configuration optimale agencée au plus près à la face d'entrée 4 du guide N.

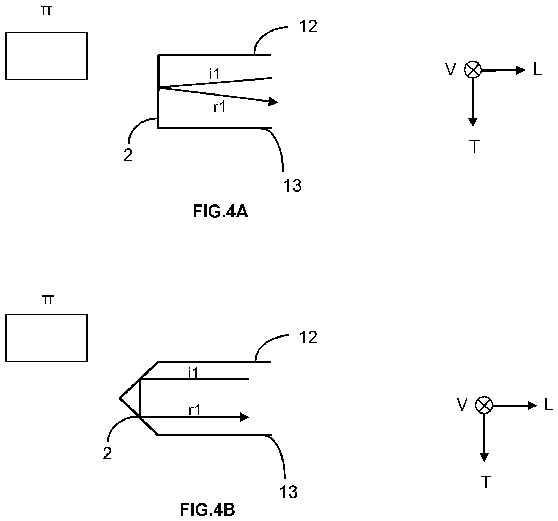

Les rayons lumineux émis par cette source lumineuse 9 sont aptes à se propager dans la nappe 1 de guidage par réflexions totales contre la face de réflexion 2. Vue de dessus, comme représenté aux figures 4A et 4B, les rayons lumineux se déplacent en ligne droite. Ainsi, la face de réflexion 2 de profil elliptique a pour fonction de réfléchir les rayons lumineux vers le point de focalisation F de la face de sortie 3, tandis que la face de sortie 3 a pour fonction de transmettre les rayons lumineux vers l'extérieur de la nappe 1 de guidage par réfraction afin de former le faisceau lumineux à la sortie de ce dispositif 11 d'éclairage et/ou de signalisation.

Ce point de focalisation F est situé sur un bord supérieur de la face de sortie 3 de la nappe 1 de guidage. Alternativement, ce point de focalisation F peut être localisé à distance du bord supérieur de la face de sortie 3 de la nappe 1.

Cette source lumineuse 9, placée très proche de la face d'entrée 4, émet un faisceau selon un axe d'émission principal sensiblement vertical. Les rayons de ce faisceau sont d'abord réfractés par la face d'entrée 4 et vont se propager dans la nappe 1 suivant un cône réduit avec une ouverture du faisceau d'environ un angle β de part et d'autre de la normale à la surface émettrice.

La valeur de l'angle β va dépendre de l'indice de réfraction du matériau constitutif de la nappe 1, elle sera d'environ 40° quand la nappe 1 est en polycarbonate (PC). L'étendue de la face de réflexion 2 de profil elliptique est choisie de telle sorte que l'angle α sous lequel cette face de réflexion 2 est vu depuis la source lumineuse 9 s'étend de part et d'autre de la normale à la source au moins selon un angle α d'environ 45° en général, afin de récupérer un maximum du flux lumineux issu de la source lumineuse 9.

La totalité des rayons du faisceau émis par la source lumineuse 9 entre dans la nappe 1 pour y être guidée dans la direction verticale perpendiculaire au plan des figures 1 et 2, puis pour y être réfléchi vers le point de focalisation F de la face de sortie 3, dans le plan vertical des figures 1 et 2. La source lumineuse 9 est alors capable de réaliser un pixel dont la largeur angulaire est directement liée à l'épaisseur du guide N.

Le matériau constituant la nappe 1 ne requiert pas d'aluminage de la face de réflexion 2 pour que la majeure partie des rayons émis de la source lumineuse 9 arrive selon un angle d'incidence supérieur à l'angle de réflexion totale.

Ainsi, un rayon i1 situé dans le plan des figures 1 et 2, émis par la source 9 et incliné vers l'avant par rapport à la normale à la source, présente alors un angle d'incidence sur la face arrière 2 supérieur à l'angle de réflexion totale. Ce rayon i1 est réfléchi selon un rayon r1 vers le point de focalisation F.

Pour un rayon i3 émis par la source lumineuse 9 vers la face de réflexion 2 selon une direction similaire à la normale à la source présente généralement un angle d'incidence sensiblement égal à l'angle de réflexion totale. Le rayon i3 est alors réfléchi suivant un rayon r3 vers le point de focalisation F.

On notera que dans la mesure où la face de réflexion 2 est aluminée, ce qui n'est pas systématiquement le cas comme il est décrit par la suite, un rayon i2 émis par la source 9 vers l'arrière par rapport à la normale à la source présente généralement un angle d'incidence inférieur à l'angle de réflexion totale. Le rayon i2 est alors réfléchi suivant un rayon r2 vers le point de focalisation F.

La réflexion de ces différents rayons r1, r2 ou r3 est réalisée au niveau de la face de réflexion 2, par exemple au niveau de la zone réfléchissante R.

On remarquera aux figures 1 et 2, que certains rayons lumineux i4 sont émis directement vers la face de sortie 3 de la nappe 1 de guidage, qu'ils atteignent avec un angle d'incidence qui permet auxdits rayons lumineux d'être transmis à l'extérieur de la nappe 1 de guidage par réfraction. Les autres rayons lumineux r1, r2 ou r3, ainsi que nous l'avons vu précédemment sont réfléchis par la face de réflexion 2 sur en direction de la face de sortie 3, qu'ils atteignent avec un angle d'incidence qui permet auxdits rayons lumineux réfléchis d'être transmis à l'extérieur de la nappe 1 de guidage par réfraction. On notera que le fait que la face de réflexion 2 de réflexion soit conformée en ellipse permet d'avoir deux points de focalisation : l'un à la source, l'autre sur la face de sortie 3.

La zone réfléchissante R est comprise sur une partie ou la totalité de la face de réflexion 2. Elle est agencée dans le plan longitudinal de manière à réfléchir dans la nappe 1 de guidage tout rayon lumineux se propageant dans ladite nappe 1.

Cette zone R comprend une surface qui est apte à rediriger les rayons lumineux r1, r2 ou r3 qui l'atteignent (au moins en partie) dans la nappe 1 de guidage par réflexion. Elle comporte tout moyen optique permettant cette réflexion selon par exemple :
- un traitement de la surface concernée la rendant réfléchissante intrinsèquement, notamment lorsque le profil de la face de réflexion 2 est elliptique. Il s'agit notamment du dépôt d'un revêtement réfléchissant de faible épaisseur ;
- les caractéristiques optiques du profil elliptique de la face de réflexion 2 comprenant cette zone réfléchissante R qui offre un angle d'incidence des rayons à réfléchir propre à permettre que les rayons soient réfléchis sur la surface de cette zone selon le principe de la réflexion totale, ainsi qu'il est illustré en figure 4A ;
- une configuration de cette zone réfléchissante R afin qu'elle revêt des caractéristiques similaires à celles d'un prisme en toit, permettant alors la réalisation d'une double réflexion interne pour une partie des rayons dirigée vers cette zone, ainsi qu'il est illustré en figure 4B.

Dans une variante, cette zone réfléchissante R peut être réalisée à partir d'une combinaison de ces moyens de réflexion. Par exemple, en combinant deux moyens de réflexion mentionnés précédemment, on peut déposer une couche réfléchissante sur une partie de la surface cette zone réfléchissante R et interrompre la couche sur le reste de la surface qui fonctionne, elle, en réflexion totale. La délimitation entre la zone à aluminer et la zone en réflexion totale peut être déterminée précisément par un opticien.

Ainsi que nous l'avons vu précédemment, la zone réfléchissante R peut donc être en partie ou totalement recouverte par le revêtement de matériau réfléchissant pour réfléchir les rayons dans la nappe 1. Dans la pratique, le revêtement de matériau réfléchissant mord légèrement sur les tronçons d'extrémité proche des faces d'entrée et de sortie de la face de réflexion 2 de manière à ce que la totalité des rayons lumineux émis par la source lumineuse 9 soit utilisée pour former le faisceau lumineux.

Chaque revêtement de matériau réfléchissant est préalablement agencé sur la zone réfléchissante R associée à la face de réflexion 2 de la nappe 1 de guidage. Il s'agit par exemple d'un dépôt de matière par aluminage par des techniques connues ou encore de l'application d'un film adhérent réalisé en matériau réfléchissant.

A la figure 4A qui est une vue de dessus de la face de réflexion 2, cette face de réflexion 2 de profil elliptique ayant une forme de section droite possédant un profil rectiligne, présente des caractéristiques optiques offrant un angle d'incidence des rayons à réfléchir propre à permettre que les rayons soient réfléchis sur la surface de cette zone R selon le principe de la réflexion totale. Ces caractéristiques optiques résultent notamment des propriétés du matériau constituant la nappe 1 et par extension constituant la face de réflexion 2. On entend par section droite de la face de réflexion 2 en un point, la section de la face de réflexion 2 par un plan normal à la face de réflexion en ce point.

A la figure 4B, qui est une vue de dessus de la face de réflexion 2, Cette face de réflexion 2 présente une section droite ayant un profil de prisme en toit, notamment sur tout le long de cette face de réflexion. Une telle configuration permet la réalisation d'une double réflexion interne pour une partie ou la totalité des rayons dirigés vers la face de réflexion 2. Une telle configuration a pour avantage que les pertes au niveau de la réflexion sont négligeables. De plus en faisant intervenir deux réflexions totales internes pour les rayons dirigés vers la face de réflexion 2, on peut alors éviter d'aluminier la zone réfléchissante R de la face de réflexion 2 de la nappe 1 ce qui entraîne une réduction du coût de production et une amélioration du rendement lumineux. En effet, les processus d'aluminiage sont très coûteux.

Par ailleurs, la lentille 6, dite lentille de projection, est agencée au niveau de la face de sortie 3 et est apte à récupérer les rayons sortant de la nappe 1 de guidage. Le point focalisation F situé sur ladite face de sortie 3 correspond au foyer principal objet de cette lentille 6. Les rayons lumineux transmis à l'extérieur par le foyer de focalisation de la face de sortie 3 forment le faisceau lumineux qui est projeté par la lentille 6 selon l'axe optique Ox longitudinal.
Cette lentille 6 assure ainsi une collimation (c'est à dire un faisceau de rayons parallèles) suivant la direction de l'axe optique dans le plan verticale. Ainsi, les rayons émergents issus du foyer ont une direction qui est contenue dans le plan horizontal π contenant l'axe optique Ox.

L'ouverture du faisceau en sortie de la nappe 1 de guidage au niveau de la face de sortie 3 peut être configurée de sorte à permettre aux rayons d'entrer dans la lentille 6 de manière optimale. Une telle optimisation est obtenue en décalant verticalement la source de lumière 9 avec le point de focalisation F. Ainsi, la localisation du point de focalisation F sur la face de sortie 3 est fonction de celle de la source au niveau de la face d'entrée 4.

Aux figures 1 et 2 deux variantes du dispositif 11 d'éclairage et/ou de signalisation sont représentées. Ces deux variantes se distinguent l'une de l'autre du fait que la face avant 7 de leur nappe 1 de guidage soit différent. En effet, dans la variante illustrée à la figure 1 ce bord avant 7, réalisé selon le principe de l'effet plieuse, comporte deux parties planes liées par une pliure. Dans cette variante, le point de focalisation F est situé alors au croisement de ce bord avant 7 avec la face de sortie 3. Grâce à l'effet plieuse, la portée du faisceau en sortie de la nappe 1 de guidage peut être optimisée. Dans ce contexte, la configuration de l'ouverture du faisceau en sortie de la nappe 1 de guidage est obtenue par le décalage de la source lumineuse 9 par rapport au point de focalisation F, en tenant compte de l'effet plieuse.

Le faisceau obtenu en sortie de la lentille 6 est un faisceau vertical relativement ouvert avec une coupure basse.

Dans la variante illustrée à la figure 2, la face avant 7 de la nappe 1 de guidage est plane. Ainsi, l'optimisation du faisceau est réalisée sans l'utilisation de l'effet plieuse. Dès lors, la configuration de l'ouverture du faisceau en sortie de la nappe 1 de guidage est obtenue par le décalage de la source lumineuse 9 par rapport au point de focalisation F. Ce point de focalisation F peut alors en fonction de ce décalage de la source lumineuse 9, être situé sensiblement en dessous d'une arête supérieure de la face de sortie 3 de la nappe 1.

Dans un deuxième mode de réalisation de ce dispositif 11 d'éclairage et/ou de signalisation qui est représenté à la figure 3, le dispositif 11 comprend à la différence de celui du mode de réalisation précédent, une pluralité de nappes 1 alignées globalement transversalement. Dans le présent mode de réalisation, ce dispositif 11 comporte seize nappes 1. Chacune de ces nappes 1 présentent les mêmes caractéristiques et formes que la nappe 1 de guidage décrite dans le premier mode de réalisation.

Ce dispositif 11 comprend également une lentille 6 agencée au niveau des faces de sorties 3 de cette pluralité de nappes 1 de guidage. Cette lentille est apte à récupérer les rayons sortant des nappes 1 de guidage. Chaque nappe 1 de guidage est agencé par rapport à la lentille 6 de façon à ce que le point de focalisation F situé sur la face de sortie 3 de chacune de ces nappes 1 correspond au foyer principal objet de cette lentille 6. Autrement dit la lentille 6 comprend plusieurs foyers objet correspondant chacune au point de focalisation F des nappes 1 de guidage. Les rayons lumineux transmis à l'extérieur par le foyer de focalisation de la face de sortie 3 forment le faisceau lumineux qui est projeté par la lentille 6 selon l'axe optique longitudinal. Cette lentille 6 assure une collimation (c'est à dire un faisceau de rayons parallèles) suivant la direction de l'axe optique dans le plan verticale. Ainsi, les rayons émergents et provenant du foyer F ont une direction qui est contenue dans le plan horizontal π contenant l'axe optique Ox.

Ces nappes 1 de guidage sont agencées en éventail en étant tangentes au niveau de leur face de sortie 3 et en s'écartant progressivement pour aménager un espacement entre les sources lumineuses 9 de chacune de ces nappes 1 de guidage.
Plus particulièrement, la ou les arêtes de la nappe 1 de guidage résultant de l'intersection des plans formés par les faces de guidage latérales 12 et/ou 13 avec le plan formé par la face de sortie 3 de chaque nappe 1 de guidage sont adjacents entre elles de sorte à former une courbure de champ 10 associée à la lentille. Cette courbure de champ 10 peut être configurée en fonction de la lentille 6 utilisée dans ce dispositif 11. En effet, cette configuration de la courbe de champ permet de réduire les aberrations de champ pouvant résulter de la lentille 6.

Chaque nappe 1 comporte une source lumineuse 9 disposée au niveau de sa face d'entrée 4 de manière similaire au premier mode de réalisation.
Ces sources lumineuses peuvent de manière non limitative être agencées sur un même circuit imprimé. Chaque source lumineuse 9 est capable de réaliser un pixel dont la largeur angulaire est directement lié à l'épaisseur du guide N.
Le comportement des rayons lumineux dans chacune de ces nappes 1 est identique à ce qui a été décrit pour le premier mode de réalisation.

Ces axes optiques sont inclinés les uns par rapport aux autres de manière que chaque nappe 1 participe à la formation du faisceau de lumière en éclairant une direction privilégiée qui n'est pas nécessairement dans l'axe optique longitudinal.

Ainsi, ce dispositif 11 d'éclairage et/ou de signalisation permet alors de réaliser un faisceau constitué d'un assemblage de pixel (ou points lumineux) verticaux. Chaque pixel vertical étant réalisé à partir notamment d'une source lumineuse 9 pouvant être éteinte ou allumée à la commande à partir d'un système de contrôle relié à la dite source. Ainsi un tel dispositif 11 d'éclairage et/ou de signalisation peut par exemple permettre de réaliser des fonctions de type ADB (Adaptive Driving Beam, en anglais). De telles fonctions mises en œuvre par le dispositif 11 d'éclairage et/ou de signalisation permettent de pouvoir illuminer la route empruntée par un véhicule en un "mode éclairage route partiel", à savoir générer dans un faisceau route une ou plusieurs fenêtres sombres correspondant aux endroits où sont présents des véhicules venant en sens inverse ou des véhicules circulant dans le même sens, de manière à éviter l'éblouissement des occupants de ces véhicules, tout en éclairant la route dans sa plus grande surface.

Le dispositif 11 de ces deux modes de réalisation présente de nombreux avantages, comme par exemple une faible compacité, notamment en largeur et/ou encore une performance améliorée, notamment au point de vue efficacité lumineuse.

## Revendications

1. Dispositif (11) d'éclairage et/ou de signalisation, notamment pour véhicule, présentant un axe optique (Ox) et comportant plusieurs sources lumineuses (9) et une lentille (6), **caractérisé en ce que** :
- il comporte plusieurs guides (N) de rayons lumineux agencés entre lesdites sources lumineuses (9) et la lentille (6) pour que des rayons lumineux émis par les sources lumineuses (9) dans les guides (N), se propageant dans les guides (N) pour atteindre la lentille (6) et émergeant de la lentille (6) aient une direction substantiellement horizontale et contenant l'axe optique (Ox) dudit dispositif (11),
- chaque guide (N) de rayons lumineux est formé par une nappe (1) de guidage comprenant une face d'entrée (4) de lumière, une face de sortie (3) de lumière et une face de réflexion (2) de profil elliptique vers l'arrière propre à assurer une réflexion de rayons lumineux entrant dans la nappe (1) par la face d'entrée (4) de lumière vers un point de focalisation (F) situé au niveau de la face de sortie (3) de lumière de ladite nappe (1) ; et
- les guides (N) de rayons lumineux sont associés chacun à une source lumineuse (9) ; cette source lumineuse (9) étant disposée au niveau d'une face d'entrée (4) de la nappe (1) associée, les nappes (1) étant agencées en éventail, les nappes (1) étant tangentes au niveau de leur face de sortie (3) et s'écartant progressivement pour aménager un espacement entre chaque source lumineuse (9).

2. Dispositif (11) selon la revendication précédente, **caractérisé en ce que** pour chaque nappe de guidage, le point de focalisation (F) est situé à distance d'un bord supérieur de la face de sortie (3) de la nappe (1).

3. Dispositif (11) selon la revendication 1, **caractérisé en ce que** pour chaque nappe de guidage, le point de focalisation (F) est situé sur un bord supérieur de la face de sortie (3) de la nappe (1).

4. Dispositif (11) selon l'une quelconque des revendications précédentes, **caractérisé en ce que** chaque nappe (1) de guidage est délimitée longitudinalement par la face de sortie (3) qui est une tranche de la nappe (1) s'étendant verticalement et transversalement à l'extrémité avant de la nappe (1).

5. Dispositif (11) selon l'une quelconque des revendications précédentes, **caractérisé en ce que** chaque nappe (1) de guidage est délimitée longitudinalement par une face de réflexion (2) qui est une tranche s'étendant à l'arrière de la nappe (1) et qui est courbée, dans un plan vertical longitudinal, selon un profil elliptique.

6. Dispositif (11) selon la revendication 5, **caractérisé en ce qu'**une section droite de la face de réflexion (2) présente un profil de prisme en toit, notamment sur tout le long de la face de réflexion (2).

7. Dispositif (11) selon la revendication 5, **caractérisé en ce qu'**une section droite de la face de réflexion (2) présente un profil rectiligne.

8. Dispositif (11) selon l'une quelconque des revendications précédentes, **caractérisé en ce que** chaque nappe (1) de guidage est délimitée verticalement par une face avant (7) qui est une tranche s'étendant depuis un bord supérieur de la face de sortie (3) de lumière.

9. Dispositif (11) selon la revendication précédente, **caractérisé en ce que** la face avant (7) est plane.

10. Dispositif (11) selon la revendication 8, **caractérisé en ce que** la face avant (7) présente deux parties planes liées par une pliure.

11. Dispositif (11) selon l'une quelconque des revendications précédentes, **caractérisé en ce que** chaque nappe (1) de guidage est délimitée verticalement par la face d'entrée (4) qui est une tranche s'étendant transversalement et longitudinalement.

12. Dispositif (11) selon l'une quelconque des revendications précédentes, **caractérisé en ce que** chaque nappe (1) de guidage est délimitée transversalement par deux faces de guidage (12, 13).

13. Dispositif (11) selon l'une quelconque des revendications précédentes, **caractérisé en ce que** chaque nappe (1) de guidage a une épaisseur constante correspondant à la largeur de la face d'entrée (4) et de la face de sortie (3).

14. Dispositif (11) selon l'une des revendications précédentes, **caractérisé en ce que** chaque source lumineuse (9) est apte à émettre un cône de lumière selon un axe d'émission principal, un point de focalisation (F) de la nappe (1) de guidage associée étant disposé de façon à ce qu'un rayon émis par la source lumineuse (9) dans une direction parallèle à l'axe d'émission principal sort du guide (N) dans une direction parallèle à l'axe optique (Ox).

15. Dispositif (11) selon l'une des revendications précédentes, **caractérisé en ce que** chaque nappe (1) de guidage est agencé par rapport à la lentille (6) de façon à ce que le point de focalisation (F) associé correspond au foyer objet de ladite lentille (6).

## Patentansprüche

1. Beleuchtungs- und/oder Signalisierungsvorrichtung (11), insbesondere für ein Fahrzeug, welche eine optische Achse (Ox) aufweist und mehrere Lichtquellen (9) und eine Linse (6) umfasst, **dadurch gekennzeichnet, dass**:
- sie mehrere Lichtstrahlführungen (N) umfasst, die zwischen den Lichtquellen (9) und der Linse (6) angeordnet sind, damit Lichtstrahlen, die von den Lichtquellen (9) in die Führungen (N) abgegeben werden, sich in den Führungen (N) ausbreiten, um die Linse (6) zu erreichen und, wenn sie aus der Linse (6) austreten, eine Richtung aufweisen, die im Wesentlichen horizontal ist und die optische Achse (Ox) der Vorrichtung (11) enthält,
- jede Lichtstrahlführung (N) von einer Führungsschicht (1) gebildet wird, die eine Lichteintrittsfläche (4), eine Lichtaustrittsfläche (3) und eine Reflexionsfläche (2) mit nach hinten elliptischem Profil, die dafür eingerichtet ist, eine Reflexion von über die Lichteintrittsfläche (4) in die Schicht (1) eintretenden Lichtstrahlen in Richtung eines an der Lichtaustrittsfläche (3) der Schicht (1) befindlichen Fokussierungspunktes (F) sicherzustellen, umfasst; und
- die Lichtstrahlführungen (N) jeweils einer Lichtquelle (9) zugeordnet sind; wobei diese Lichtquelle (9) an einer Eintrittsfläche (4) der zugeordneten Schicht (1) angeordnet ist, wobei die Schichten (1) fächerartig angeordnet sind, wobei die Schichten (1) an ihrer Austrittsfläche (3) einander berühren und sich zunehmend voneinander entfernen, um Zwischenräume zwischen den jeweiligen Lichtquellen (9) zu bilden.

2. Vorrichtung (11) nach dem vorhergehenden Anspruch, **dadurch gekennzeichnet, dass** sich für jede Führungsschicht der Fokussierungspunkt (F) in einem Abstand von einem oberen Rand der Austrittsfläche (3) der Schicht (1) befindet.

3. Vorrichtung (11) nach Anspruch 1, **dadurch gekennzeichnet, dass** sich für jede Führungsschicht der Fokussierungspunkt (F) auf einem oberen Rand der Austrittsfläche (3) der Schicht (1) befindet.

4. Vorrichtung (11) nach einem der vorhergehenden Ansprüche, **dadurch gekennzeichnet, dass** jede Führungsschicht (1) in Längsrichtung von der Austrittsfläche (3) begrenzt wird, welche ein Teilabschnitt der Schicht (1) ist, der sich vertikal und quer zum vorderen Ende der Schicht (1) erstreckt.

5. Vorrichtung (11) nach einem der vorhergehenden Ansprüche, **dadurch gekennzeichnet, dass** jede Führungsschicht (1) in Längsrichtung von einer Reflexionsfläche (2) begrenzt wird, welche ein Teilabschnitt ist, der sich hinter der Schicht (1) erstreckt, und welche in einer vertikalen Längsebene mit einem elliptischen Profil gekrümmt ist.

6. Vorrichtung (11) nach Anspruch 5, **dadurch gekennzeichnet, dass** ein Querschnitt der Reflexionsfläche (2) ein Profil von der Form eines Dachprismas aufweist, insbesondere entlang der gesamten Reflexionsfläche (2).

7. Vorrichtung (11) nach Anspruch 5, **dadurch gekennzeichnet, dass** ein Querschnitt der Reflexionsfläche (2) ein gerades Profil aufweist.

8. Vorrichtung (11) nach einem der vorhergehenden Ansprüche, **dadurch gekennzeichnet, dass** jede Führungsschicht (1) vertikal von einer vorderen Fläche (7) begrenzt wird, welche ein Teilabschnitt ist, der sich von einem oberen Rand der Lichtaustrittsfläche (3) aus erstreckt.

9. Vorrichtung (11) nach dem vorhergehenden Anspruch, **dadurch gekennzeichnet, dass** die vordere Fläche (7) eben ist.

10. Vorrichtung (11) nach Anspruch 8, **dadurch gekennzeichnet, dass** die vordere Fläche (7) zwei ebene Abschnitte aufweist, die durch eine Biegung verbunden sind.

11. Vorrichtung (11) nach einem der vorhergehenden Ansprüche, **dadurch gekennzeichnet, dass** jede Führungsschicht (1) vertikal von der Eintrittsfläche (4) begrenzt wird, welche ein Teilabschnitt ist, der sich in Quer- und Längsrichtung erstreckt.

12. Vorrichtung (11) nach einem der vorhergehenden Ansprüche, **dadurch gekennzeichnet, dass** jede Führungsschicht (1) in Querrichtung von zwei Führungsflächen (12, 13) begrenzt wird.

13. Vorrichtung (11) nach einem der vorhergehenden Ansprüche, **dadurch gekennzeichnet, dass** jede Führungsschicht (1) eine konstante Dicke aufweist, die der Breite der Eintrittsfläche (4) und der Austrittsfläche (3) entspricht.

14. Vorrichtung (11) nach einem der vorhergehenden Ansprüche, **dadurch gekennzeichnet, dass** jede Lichtquelle (9) in der Lage ist, einen Lichtkegel entlang einer Hauptemissionsachse auszusenden, wobei ein Fokussierungspunkt (F) der zugeordneten Führungsschicht (1) so angeordnet ist, dass ein Strahl, der von der Lichtquelle (9) in einer zu der Hauptemissionsachse parallelen Richtung ausgesendet wird, in einer zu der optischen Achse (Ox) parallelen Richtung aus der Führung (N) austritt.

15. Vorrichtung (11) nach einem der vorhergehenden Ansprüche, **dadurch gekennzeichnet, dass** jede Führungsschicht (1) in Bezug auf die Linse (6) so angeordnet ist, dass der zugeordnete Fokussierungspunkt (F) dem objektseitigen Brennpunkt der Linse (6) entspricht.

## Claims

1. Lighting and/or signaling device (11), notably for vehicles, having an optical axis (Ox) and including light sources (9) and a lens (6), **characterized in that**:
- it includes a plurality of light ray guides (N) arranged between said light sources (9) and the lens (6) so that light rays emitted by the light sources (9) in the guide (N) propagate in the guides (N) to reach the lens (6) and on emerging from the lens (6) have a substantially horizontal direction containing the optical axis (Ox) of said device (11);
- each light ray guide (N) is formed by a guide plate (1) comprising a light entry face (4), a light exit face (3) and a reflection face (2) having an elliptical profile toward the rear adapted to assure reflection of light rays entering the plate (1) through the light entry face (4) toward a focus point (F) located at the level of the light exit face (3) of said plate (1);
- said plurality of light ray guides (1) are associated each with a light source (9), this light source (9) being disposed at the level of an entry face (4) of the associated plate (1), the plates (1) being arranged in a fan, the plates (1) being tangential at the level of their exit face (3) and diverging progressively to produce a spacing between each light source (9).

2. Device (11) according to the preceding claim, **characterized in that** for each guide plate, the focus point (F) is located at a distance from an upper edge of the exit face (3) of the plate (1).

3. Device (11) according to Claim 1, **characterized in that** for each guide plate, the focus point (F) is located on an upper edge of the exit face (3) of the plate (1).

4. Device (11) according to any one of the preceding claims, **characterized in that** each guide plate (1) is delimited longitudinally by the exit face (3) which is an edge surface of the plate (1) extending vertically and transversely at the front end of the plate (1).

5. Device (11) according to any one of the preceding claims, **characterized in that** each guide plate (1) is delimited longitudinally by a reflection face (2) which is an edge surface lying at the rear of the plate (1) and is curved in a vertical longitudinal plane with an elliptical profile.

6. Device (11) according to Claim 5, **characterized in that** a cross section of the reflection face (2) has a roof-shaped prism profile, notably over all the length of the reflection face (2).

7. Device (11) according to Claim 5, **characterized in that** a cross section of the reflection face (2) has a rectilinear profile.

8. Device (11) according to any one of the preceding claims, **characterized in that** each guide plate (1) is delimited vertically by a front face (7) which is an edge surface extending from an upper edge of the light exit face (3).

9. Device (11) according to the preceding claim, **characterized in that** the front face (7) is plane.

10. Device (11) according to Claim 8, **characterized in that** the front face (7) has two plane parts joined by a bend.

11. Device (11) according to any one of the preceding claims, **characterized in that** each guide plate (1) is delimited vertically by the entry face (4) which is an edge surface extending transversely and longitudinally.

12. Device (11) according to any one of the preceding claims, **characterized in that** each guide plate (1) is delimited transversely by two guide faces (12, 13).

13. Device (11) according to any one of the preceding claims, **characterized in that** each guide plate (1) has a constant thickness corresponding to the width of the entry face (4) and the exit face (3).

14. Device (11) according to any one of the preceding claims, **characterized in that** each light source (9) is adapted to emit a cone of light along a main emission axis, a focus point (F) of the associated guide plate (1) being disposed so that a ray emitted by the light source (9) in a direction parallel to the main emission axis leaves the guide (N) in a direction parallel to the optical axis (Ox).

15. Device (11) according to any one of the preceding claims, **characterized in that** each guide plate (1) is arranged relative to the lens (6) so that the associated focus point (F) corresponds to the object focus of said lens (6).
